(19) Europäisches Patentamt
European Patent Office
Office européen des brevets

(11) **EP 3 961 750 A1**

(12) **EUROPEAN PATENT APPLICATION**

(43) Date of publication:
**02.03.2022  Bulletin 2022/09**

(21) Application number: **21153430.0**

(22) Date of filing: **26.01.2021**

(51) International Patent Classification (IPC):
*H01M 4/04* <sup>(2006.01)</sup>   *H01M 4/139* <sup>(2010.01)</sup>
*H01M 4/62* <sup>(2006.01)</sup>   *H01M 4/66* <sup>(2006.01)</sup>
*H01M 10/0525* <sup>(2010.01)</sup>

(52) Cooperative Patent Classification (CPC):
**H01M 4/0404; H01M 4/043; H01M 4/139;**
**H01M 4/62; H01M 4/621; H01M 4/622;**
**H01M 4/667; H01M 10/0525**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2020  CN 202010896031**

(71) Applicant: **Ningde Amperex Technology Limited
Ningde, Fujian 352100 (CN)**

(72) Inventors:
• **ZHU, Shan
  Ningde City,, Fujian Province 352100 (CN)**

• **GUAN, Ting
  Ningde City,, Fujian Province 352100 (CN)**
• **WU, Fei
  Ningde City,, Fujian Province 352100 (CN)**

(74) Representative: **Klunker IP
Patentanwälte PartG mbB
Destouchesstraße 68
80796 München (DE)**

Remarks:
Amended claims in accordance with Rule 137(2)
EPC.

(54) **ELECTRODE PLATE, ELECTROCHEMICAL APPARATUS, AND ELECTRONIC APPARATUS**

(57)     An electrode plate includes: a current collector
(1), including, in a width direction, a first edge region (4),
a second edge region (5), and an intermediate region (6)
located between the first edge region (4) and the second
edge region (5); and an active material layer (2) provided
on the current collector (1). The active material layer (2)
includes a first portion (7), a second portion (8), and an
intermediate portion (9) respectively provided on the first
edge region (4), the second edge region (5), and the in-
termediate region (6). A first adhesive force between the
first portion (7) and the current collector (1) and a second
adhesive force between the second portion (8) and the
current collector (1), are both greater than a third adhesive force between the intermediate portion (9) and the
current collector (1).

FIG. 1

EP 3 961 750 A1

**Description**

**TECHNICAL FIELD**

This application relates to the field of electrochemical technologies, and in particular, to an electrode plate, an electrochemical apparatus, and an electronic apparatus.

**BACKGROUND**

Currently, to ensure processing and safety performance of an electrode plate, a primer layer is usually added between a current collector and an active material layer. Although adding the primer layer can significantly improve an adhesive force between the electrode plate and the current collector, a volume-energy density of an electrochemical apparatus (for example, a lithium-ion battery) is reduced. How to improve electrical performance of the electrochemical apparatus and ensure its volume-energy density is a problem to be resolved.

**SUMMARY**

In embodiments of this application, a coating region is controlled, so that an electrical performance and a safety performance of an electrochemical apparatus is improved without losing a volume-energy density of the electrochemical apparatus.

An embodiment of this application provides an electrode plate, the electrode plate includes: a current collector, including, in a width direction, a first edge region, a second edge region, and an intermediate region located between the first edge region and the second edge region; and an active material layer provided on the current collector, where the active material layer includes a first portion, a second portion, and an intermediate portion respectively provided on the first edge region, the second edge region, and the intermediate region, where a first adhesive force between the first portion and the current collector, and a second adhesive force between the second portion and the current collector, are both greater than a third adhesive force between the intermediate portion and the current collector.

In some embodiments, the first portion has a width d1, the second portion has a width d2, and the active material layer has a width D, where $1\% \leq d1/D \leq 10\%$, and $1\% \leq d2/D \leq 10\%$.

In some embodiments, the first portion includes a first binder, the second portion includes a second binder, the intermediate portion includes a third binder, and a weight percentage of the first binder and a weight percentage of the second binder each are greater than a weight percentage of the third binder; and/or adhesive forces of the first binder and the second binder on the current collector each are greater than an adhesive force of the third binder on the current collector.

In some embodiments, the first adhesive force and the second adhesive force are both 2 to 5 times the third adhesive force; and/or the first adhesive force and the second adhesive force are both greater than 10 N/m.

In some embodiments, the weight percentage of the third binder is 1% to 5%, and the weight percentages of the first binder and the second binder each are 2 to 5 times the weight percentage of the third binder.

In some embodiments, when the electrode plate is a positive electrode plate, the active material layer is a positive active material layer, and the first binder, the second binder, and the third binder each independently include at least one of polyvinylidene fluoride, polyvinylidene fluoride-fluorinated olefin copolymer, polytetrafluoroethylene, sodium carboxymethyl cellulose, styrene-butadiene rubber, polyurethane, fluorinated rubber, or polyvinyl alcohol; and when the electrode plate is a negative electrode plate, the active material layer is a negative active material layer, and the first binder, the second binder, and the third binder each independently include at least one of polyvinylidene fluoride, polyvinylidene fluoride-fluorinated olefin copolymer, polyvinylpyrrolidone, polyacrylonitrile, poly(methyl acrylate), polytetrafluoroethylene, sodium carboxymethyl cellulose, styrene-butadiene rubber, polyurethane, fluorinated rubber, or polyvinyl alcohol.

In some embodiments, at least a partial region in the current collector is etched.

In some embodiments, the first edge region and the second edge region of the current collector are etched, and coarseness of the first edge region and the second edge region each are 2 to 4 times that of the intermediate region.

In some embodiments, a coarseness of the etched region of the current collector is 2 to 4 times that of the non-etched region, and a coarseness of the non-etched region is less than 2 $\mu$m.

Another embodiment of this application provides an electrochemical apparatus, including a positive electrode plate, a negative electrode plate, and a separator, where the separator is provided between the positive electrode plate and the negative electrode plate, where the positive electrode plate and/or the negative electrode plate is the electrode plate in any one of foregoing embodiments.

An embodiment of this application further provides an electronic apparatus including the foregoing electrochemical apparatus.

In the embodiments of this application, the adhesive force between the current collector and the active material layer at the edge region of the current collector is made greater than the adhesive force between the current collector and the active material layer at the intermediate region, so that the current collector can be prevented from peeling off in a cycle process of the electrochemical apparatus without affecting a volume-energy density of the electrochemical apparatus, thereby improving an electrical performance and a safety performance of the electrochemical apparatus.

**BRIEF DESCRIPTION OF DRAWINGS**

FIG. 1 is a front view of an electrode plate according to an embodiment of this application.
FIG. 2 is a vertical view of an electrode plate according to an embodiment of this application.
FIG. 3 is a front view of an electrode assembly in an electrochemical apparatus according to an embodiment of this application.

**DESCRIPTION OF EMBODIMENTS**

The following embodiments may help persons skilled in the art to understand this application more comprehensively, but impose no limitation on this application in any manner.

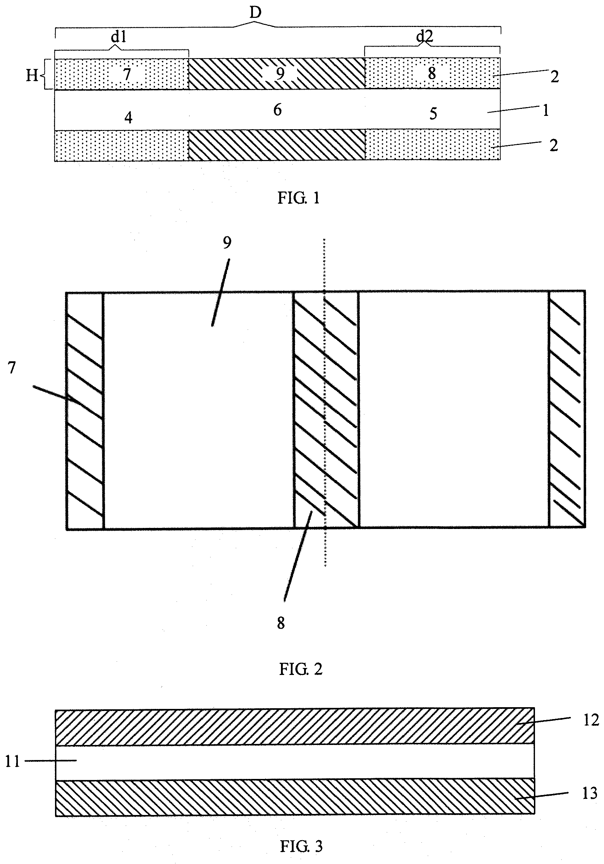

FIG. 1 is a front view (a sectional view) of an electrode plate according to an embodiment of this application. The electrode plate may include a current collector 1, and the current collector 1 includes, in a width direction, a first edge region 4, a second edge region 5, and an intermediate region 6 located between the first edge region 4 and the second edge region 5. It should be understood that, although the first edge region 4, the second edge region 5, and the intermediate region 6 are separated by a dotted line in FIG. 1, there may not actually be a boundary at the dotted line. In some embodiments, the electrode plate further includes an active material layer 2 provided on the current collector 1, and the active material layer 2 may include a first portion 7, a second portion 8, and an intermediate portion 9 respectively provided on the first edge region 4, the second edge region 5, and the intermediate region 6.

In some embodiments, a first adhesive force between the first portion 7 and the current collector 1, and a second adhesive force between the second portion 8 and the current collector 1, are both greater than a third adhesive force between the intermediate portion 9 and the current collector 1. In this embodiment of this application, adhesive forces between the current collector 1 and the first portion 7 and the second portion 8 at the edge regions of the current collector are made greater than the adhesive force between the current collector 1 and the intermediate portion 9 at the intermediate region, so that the current collector can be prevented from peeling off in a cycle process of the electrochemical apparatus without affecting a volume-energy density of the electrochemical apparatus, thereby improving an electrical performance and a safety performance of the electrochemical apparatus.

In some embodiments, the first portion 7 has a width d1, the second portion 8 has a width d2, and the active material layer 2 has a width D, where $1\% \leq d1/D \leq 10\%$, and $1\% \leq d2/D \leq 10\%$. If the width of the first portion 7 or the second portion 8 is excessively small, for example, less than 1% of a width of a second coating, improvement of the adhesive force between the current collector and the active material layer at the edge region of the current collector is limited. If the width of the first portion 7 or the second portion 8 is excessively large, for example, greater than 10% of the width of the second coating, the volume-energy density of the electrochemical apparatus may be adversely affected.

In some embodiments, the first portion 7 includes a first binder, the second portion 8 includes a second binder, the intermediate portion 9 includes a third binder, and weight percentages of the first binder and the second binder each are greater than a weight percentage of the third binder. The weight percentages of the first binder and the second binder are made greater than the weight percentage of the third binder, so that the adhesive forces between the current collector 1 and the first portion 7 and the second portion 8 of the active material layer 2 at the edge region of the current collector 1 each are greater than the adhesive force between the current collector 1 and the intermediate portion 9. In some embodiments, the adhesive forces of the first binder and the second binder on the current collector 1 each are greater than the adhesive force of the third binder on the current collector 1. That is, compared with the third binder, the first binder and the second binder have stronger adhesion, so that the adhesive forces between the current collector 1 and the first portion 7 and the second portion 8 of the active material layer 2 at the edge region of the current collector 1 each are greater than the adhesive force between the current collector 1 and the intermediate portion 9.

In some embodiments, the first adhesive force and the second adhesive force are both 2 to 5 times the third adhesive force. In some embodiments, the first adhesive force and the second adhesive force are both greater than 10 N/m. In this way, the adhesive forces between the current collector 1 and the active material layer 2 at the edge region of the current collector 1 (that is, the first portion 7 and the second portion 8) can be better improved.

In some embodiments, a thickness of the active material layer 2 is H, where $20 \mu m < H < 200 \mu m$. If the thickness of the active material layer is excessively small, there is an excessively small amount of an active material per unit area, which affects the volume-energy density of the electrochemical apparatus. If the thickness of the active material layer is excessively large, lithium ions near the active material layer of the current collector need to move an excessively long path for intercalation and deintercalation, affecting intercalation and deintercalation efficiency of the lithium ions.

In some embodiments, a weight percentage of the third binder is 1% to 5%, and the weight percentages of the first binder and the second binder each are 2 to 5 times the weight percentage of the third binder. If a weight percentage of the first binder and/or the second binder is excessively low, improvement of the adhesive force between the first portion 7 and the current collector 1 or the adhesive force between the second portion 8 and the current collector 1 is limited. If the mass weight percentage of the first binder and/or the second binder is excessively high, the volume-energy density of the electrochemical apparatus may be adversely affected. It should be understood that the weight percentage of the first binder in the first portion and the weight percentage of the second binder in the second portion may be the same or different.

In some embodiments, when the electrode plate is a positive electrode plate, the active material layer 2 is a positive active material layer, and the first binder, the second binder, and the third binder each independently include at least one of polyvinylidene fluoride, polyvinylidene fluoride-fluorinated olefin copolymer, polytetrafluoroethylene, sodium carboxymethyl cellulose, styrene-butadiene rubber, polyurethane, fluorinated rubber, or polyvinyl alcohol. In some embodiments, when the electrode plate is a negative electrode plate, the active material layer 2 is a negative active material layer, and the first binder, the second binder, and the third binder each independently include at least one of polyvinylidene fluoride, polyvinylidene fluoride-fluorinated olefin copolymer, polyvinylpyrrolidone, polyacrylonitrile, poly(methyl acrylate), polytetrafluoroethylene, sodium carboxymethyl cellulose, styrene-butadiene rubber, polyurethane, fluorinated rubber, or polyvinyl alcohol.

It should be understood that although in FIG. 1, the active material layer is formed on both sides of the current collector 1, this is only an example, and the active material layer may alternatively be formed on only one side of the current collector.

FIG. 2 is a top view of an electrode plate according to an embodiment of this application. For brevity, only the first portion 7, the second portion 8, and the intermediate portion 9 of the active material layer 2 are shown. Dashed lines in FIG. 2 mark striping locations of the electrode plate. The first portion 7 and the second portion 8 that apply greater adhesive forces on the current collector 1 on the edge region of the current collector are provided, so that impact of stress can be reduced during striping and generation of burrs of the current collector 1 can be reduced during striping.

In some embodiments, at least a partial region or a global region in the current collector 1 is etched. The current collector 1 is etched, and coarseness of the current collector can be correspondingly increased, thereby increasing the adhesive force between the current collector 1 and the active material layer 2. In some embodiments, the first edge region 4 and the second edge region 5 are etched, and coarseness of the first edge region 4 and the second edge region 5 is 2 to 4 times that of the intermediate region. The first edge region 4 and the second edge region 5 are etched, so that the adhesive force between the current collector 1 and the first portion 7, and the adhesive force between the current collector 1 and the second portion 8 are further enhanced. In some embodiments, a brown oxide manner or a black oxide manner is mainly used for etching. Certainly, another appropriate manner may alternatively be used for etching. In some embodiments, coarseness of the etched region of the current collector is 2 to 4 times that of the non-etched region. In some embodiments, a coarseness of the non-etched region is less than 2 $\mu$m.

It should be understood that the electrode plate in this application may be a positive electrode plate or a negative electrode plate. As shown in FIG. 3, an embodiment of this application further provides an electrochemical apparatus. The electrochemical apparatus includes a separator 11, a positive electrode plate 12, and a negative electrode plate 13. The separator 11 is provided between the positive electrode plate 12 and the negative electrode plate 13, and the positive electrode plate 12 and/or the negative electrode plate 13 is an electrode plate with the foregoing structure.

In some embodiments, a positive current collector of the positive electrode plate 12 may be made of Al foil, and certainly, another positive current collector usually used in the art may also be used. In some embodiments, a thickness of the positive current collector may be 1 $\mu$m to 200 $\mu$m.

In some embodiments, when the electrode plate is the positive electrode plate 12, a positive active material of the active material layer 2 may include at least one of lithium cobalt oxide, lithium manganate oxide, lithium iron phosphate, lithium nickel cobalt manganate, lithium nickel cobalt aluminate, or lithium nickel manganese oxide. In some embodiments, the active material layer 2 further includes a conductive agent. In some embodiments, the conductive agent in the active material layer 2 may include at least one of conductive carbon black, Ketjen black, a graphite sheet, graphene, a carbon nanotube, or a carbon fiber. In some embodiments, a mass ratio of the positive active material to the conductive agent to the binder in the active material layer 2 may be 92~98.5:0.5~3:1~5. It should be understood that the foregoing description is only an example, and any other appropriate material, thickness, and mass ratio can be used for the positive active material layer.

In some embodiments, a negative current collector of the negative electrode plate 13 may be at least one of copper foil, nickel foil, or carbon-based current collector, and certainly, another negative current collector usually used in the art may also be used. In some embodiments, a thickness of the negative current collector may be 1 $\mu$m to 200 $\mu$m.

In some embodiments, when the electrode plate is a negative electrode plate 13, a negative active material of the active material layer 2 may include at least one of artificial graphite, natural graphite, hard carbon, carbonaceous mesophase spherule, a silicon alloy, a tin alloy, or pure silicon. In some embodiments, the active material layer 2 may further include a conductive agent. The conductive agent in the active material layer 2 may include at least one of conductive carbon black, Ketjen black, a graphite sheet, graphene, a carbon nanotube, or a carbon fiber. It should be understood that the materials disclosed above are only an example, and any other appropriate material may be used for the active material layer 2 serving as the negative active material layer. In some embodiments, a mass ratio of the negative active material to the conductive agent to the binder in the active material layer 2 may be 92~98.5:0.5~3:1~5. It should be understood that the foregoing description is only an example, and any other appropriate mass ratio can be used.

In some embodiments, the separator 11 includes at least one of polyethylene, polypropylene, polyvinylidene fluoride, polyethylene terephthalate, polyimide, or aramid. For example, polyethylene includes at least one of high-density polyethylene, low-density polyethylene, or ultra-high molecular weight polyethylene. Especially, polyethylene and polypropylene have a good short-circuit prevention effect, and can improve stability of the battery through a shutdown effect. In some embodiments, a thickness of the separator is approximately in a range of 5 $\mu$m to 500 $\mu$m.

In some embodiments, a surface of the separator may further include a porous layer, the porous layer is provided on at least one surface of the separator, the porous layer includes inorganic particles and a binder, and the inorganic particles are at least one of aluminum oxide ($Al_2O_3$), silicon oxide ($SiO_2$), magnesium oxide (MgO), titanium oxide ($TiO_2$), hafnium oxide ($HfO_2$), tin oxide ($SnO_2$), ceria oxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, a hole of the separator has a diameter approximately in a range of 0.01 $\mu$m to 1 $\mu$m. The binder of the porous layer is at least one of polyvinylidene fluoride, vinylidene fluoride-hexafluoropropylene copolymer, polyamide, polyacrylonitrile, polyacrylate, polyacrylic acid, polyacrylate, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, an electrode assembly of the electrochemical apparatus is a wound electrode assembly or a stacked electrode assembly.

In some embodiments, the electrochemical apparatus includes a lithium-ion battery. However, this application is not limited thereto. In some embodiments, the electrochemical apparatus may further include an electrolyte. The electrolyte may be one or more of a gel electrolyte, a solid electrolyte, and an electrolyte, and the electrolyte includes a lithium salt and a non-aqueous solvent. The lithium salt is one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoro oxalate borate. For example, $LiPF_6$ is selected as the lithium salt because $LiPF_6$ can provide high ionic conductivity and improve a cycle characteristic.

The non-aqueous solvent may be selected from a carbonate compound, a carboxylate compound, an ether compound, another organic solvent, or a combination thereof.

The carbonate compound may be selected from a linear carbonate compound, a cyclic carbonate compound, a fluorocarbonate compound, or a combination thereof.

The linear carbonate compound can be selected from diethyl carbonate (DEC), dimethyl carbonate (DMC), dipropyl carbonate (DPC), methyl propyl carbonate (MPC), ethylene propyl carbonate (EPC), methyl ethyl carbonate (MEC), or a combination thereof. Instances of the cyclic carbonate compound are ethylene carbonate (EC), propylene carbonate (PC), butylene carbonate (BC), vinyl ethylene carbonate (VEC), or a combination thereof. The fluorocarbonate compound may be selected from fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

The carboxylate compound can be selected from methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, methyl formate, or a combination thereof.

The ether compound may be selected from dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

The another organic solvent may be selected from dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, phosphate ester, or a combination thereof.

In some embodiments of this application, using a lithium-ion battery as an example, the positive electrode plate, the separator, and the negative electrode plate are wound or stacked into the electrode assembly sequentially, and then packed into, for example, an aluminum-plastic membrane for packaging, and form the lithium-ion battery after undergoing electrolyte injection, chemical conversion, and packaging. Then, a performance test is performed on the prepared lithium-ion battery.

Persons skilled in the art should understand that the method for producing the electrochemical apparatus (for example, the lithium-ion battery) described above is only an embodiment. Without departing from the content disclosed in this application, another method usually used in the art may be used.

An embodiment of this application further provides an electronic apparatus including the foregoing electrochemical apparatus. No particular limitation is imposed on the electronic apparatus in this embodiment of this application, and the electronic apparatus may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, and the like.

Some specific examples and comparative examples are listed below to better describe this application by using the lithium-ion battery as an example.

**Example 1**

Preparation of a positive electrode plate: Lithium cobalt oxide used as a positive active material, conductive carbon black used as a conductive agent, and polyvinylidene fluoride (PVDF) used as a binder were dissolved in an N-methylpyrrolidone (NMP) solution at a weight ratio of 97.6:1.1:1.3, to form a positive electrode slurry. Aluminum foil was used as a positive current collector, the positive electrode slurry was coated on the positive current collector, with a coating thickness of 50 $\mu$m, and the positive electrode plate was obtained after drying, cold pressing, and cutting.

Preparation of a negative electrode plate: Artificial graphite used as a negative active material and styrene-butadiene rubber used as a binder were dissolved in deionized water at a weight ratio of 98:2 to form a first slurry. The artificial graphite used as the negative active material and the styrene-butadiene rubber used as the binder were dissolved in deionized water at a weight ratio of 90:10 to form a second slurry. Copper foil of a thickness of 10 $\mu$m was used as a negative current collector, and the first slurry was coated on an intermediate region of the negative current collector. A coating width of the intermediate region was 80 mm, and a thickness was 60 $\mu$m. The second slurry was coated on two edge regions of the negative current collector. A coating width of each edge region was 10 mm, and a thickness was 60 $\mu$m. A negative active material layer was obtained after drying, and the negative electrode plate was obtained after cutting.

Preparation of a separator: Separator substrate was polyethylene (PE) of a thickness of 8 $\mu$m, a 2 $\mu$m alumina ceramic layer was coated on each side of the separator substrate, and finally, 2.5 mg polyvinylidene fluoride (PVDF) used as the binder was coated on the both sides coated with the alumina ceramic layer, and dried.

Preparation of an electrolyte: In an environment with a water content of less than 10 ppm, lithium hexafluorophosphate and a non-aqueous organic solvent (with a weight ratio of ethylene carbonate (EC) to dimethyl carbonate (DMC) = 40:60) were prepared at a weight ratio of 8:92 to form the electrolyte.

Preparation of a lithium-ion battery: The positive electrode plate, the separator, and the negative electrode plate were sequentially stacked, the separator was placed between the positive electrode plate and the negative electrode plate to implement isolation, and an electrode assembly was obtained through winding. The electrode assembly was placed in an aluminum-plastic membrane used as an outer package, and was dehydrated at 80°C, the foregoing electrolyte was injected and packaged, and the lithium-ion battery was obtained through processes such as chemical conversion, degassing, and trimming.

In other examples and comparative examples, parameters are changed based on the steps in Example 1. In Comparative Example 1, a primer layer is first coated on the negative current collector, a thickness of the primer layer is 2 $\mu$m, and materials of the primer layer are composed of polyvinylidene fluoride and conductive carbon black at a weight ratio of 60:40. In addition, two edge regions, on which a first portion and a second portion are coated, of the negative current collector in Example 5 are etched, coarseness of the etched edge regions is 3 $\mu$m, and coarseness of a non-etched region is 1 $\mu$m. The detailed changed parameters are shown in the table below.

The following describes testing methods for parameters in this application.

A test method of a volume-energy density is as follows:

A lithium-ion battery was placed in a thermostat at 25°C for 30 minutes, so that the lithium-ion battery reached a constant temperature. The lithium-ion battery that reached the constant temperature was charged at a constant current of 0.5 C to a voltage of 4.4 V, then charged at a constant voltage of 4.4 V to a current of 0.05 C, and then discharged at a current of 0.5 C to a voltage of 3.0 V. Discharge energy was recorded.

$$\text{Volume-energy density} = \text{discharge energy}/(\text{length} \times \text{width} \times \text{thickness of lithium-ion battery}).$$

Heavy impact test for the lithium-ion battery

At 25°C, the lithium-ion battery was charged at a constant current of 0.5 C to a voltage of 4.4 V, and then charged at a constant voltage of 4.4 V to a current of 0.05 C. A UL1642 test standard was used. A mass of a weight was 9.8 kg, a diameter of the weight was 15.8 mm, a falling height was 61 ± 2.5 cm, and a falling direction was parallel to a longitudinal direction of the separator when the impact test was performed on the lithium-ion battery. The lithium-ion battery passed the impact test if the lithium-ion battery did not explode, catch fire, or fume. In each group, 10 lithium-ion batteries were tested, and a pass rate of the heavy impact test of the lithium-ion battery was calculated (if four lithium-ion batteries passed the heavy impact test, the pass rate is expressed as 4/10).

Table 1 shows parameters and evaluation results in the examples and comparative examples

| Serial number | Whether there is a primer layer | Respective widths of a first portion and a second portion (mm) | Width of an active material layer (mm) | Respective widths of a first portion and a second portion/ Width of an active material layer | Respective weight percentages of a first binder and a second binder | Weight percentage of a third binder | Respective magnitude of a first adhesive force and a second adhesive force (N/m) | Magnitude of a third adhesive force (N/m) | Improvement of a Volume-energy density | Pass rate of an impact test |
|---|---|---|---|---|---|---|---|---|---|---|
| Comparative example 1 | There is the primer layer | 0 | 100 | 0 | 2% | 2% | 12 | 12 | 0% | 4/10 |
| Example 1 | No primer layer | 5 | 100 | 5% | 4% | 2% | 13 | 7 | 1% | 8/10 |
| Example 2 | No primer layer | 1 | 100 | 1% | 4% | 2% | 13 | 7 | 1.3% | 8/10 |
| Example 3 | No primer layer | 8 | 100 | 8% | 4% | 2% | 13 | 7 | 0.9% | 8/10 |
| Example 4 | No primer layer | 10 | 100 | 10% | 4% | 2% | 13 | 7 | 0.7% | 8/10 |
| Example 5 | No primer layer and etched | 5 | 100 | 5% | 4% | 2% | 15 | 7 | 1% | 9/10 |
| Example 6 | No primer layer | 5 | 100 | 5% | 2%(poly(methyl acrylate) with stronger adhesion is used) | 2% | 12 | 7 | 1.3% | 9/10 |

| Serial number | Whether there is a primer layer | Respective widths of a first portion and a second portion (mm) | Width of an active material layer (mm) | Respective widths of a first portion and a second portion/ Width of an active material layer | Respective weight percentages of a first binder and a second binder | Weight percentage of a third binder | Respective magnitude of a first adhesive force and a second adhesive force (N/m) | Magnitude of a third adhesive force (N/m) | Improvement of a Volume-energy density | Pass rate of an impact test |
|---|---|---|---|---|---|---|---|---|---|---|
| Example 7 | No primer layer | 5 | 100 | 5% | 8% | 2% | 16 | 7 | 0.8% | 8/10 |
| Example 8 | No primer layer | 5 | 100 | 5% | 10% | 2% | 20 | 7 | 0.6% | 8/10 |

Through comparison between Example 1 and Comparative Example 1, it can be learned that, compared with the lithium-ion battery with the negative electrode plate that has a primer layer in Comparative Example 1, in Example 1, the primer layer is eliminated, an active material layer with higher binder content is used for two edge regions of the current collector, and a first adhesive force and a second adhesive force are greater. In addition, because the primer layer is eliminated, a thickness of an electrochemical component of the lithium-ion battery is smaller, and a volume-energy density of the lithium-ion battery is increased by 1%. In addition, because there is no primer layer, an adhesive force between the active material coating and the current collector in the impact test region of the lithium-ion battery becomes weak, and the pass rate of the impact test is increased from 4/10 to 8/10.

Through comparison between Example 2 and Comparative Example 1, it can be learned that, when the primer layer is eliminated, a thickness of an electrochemical component of the lithium-ion battery is smaller, an region with high binder content in the first portion is smaller, and a volume-energy density of the lithium-ion battery is increased by 1.3%. Similarly, in Example 3 and Example 4, there is no primer layer, and therefore a thickness of a battery cell can be reduced and the volume-energy density is increased. However, as a width of the highly adhesive coating increases, a specific region coated with a high-content active material is occupied, and an increase rate of the volume-energy density tends to decrease. For Examples 1 to 4, because change degrees of the third adhesive force are the same, pass rates of the impact test are the same, and improvement is achieved compared with a case with the primer layer. Through comparison between Example 5 and Comparative Example 1, it can be learned that, when the primer layer is eliminated, a thickness of an electrochemical component of the lithium-ion battery is smaller, and a volume-energy density of the lithium-ion battery is increased by 1%. In addition, when edge regions of the current collector that are used for arranging the first portion and the second portion are etched, the adhesive force between the active material layer and the current collector can be increased when the primer layer is eliminated, a thickness level of an electrode plate can be better controlled, and an energy density can be better controlled (for example, the pass rate of the impact test of the lithium-ion battery is increased from 4/10 to 9/10).

Through comparison between Example 6 and Comparative Example 1, it can be learned that, when the primer layer is eliminated, a thickness of an electrochemical component of the lithium-ion battery is smaller, and because a binder with a stronger adhesive force is used, the weight percentage of the binder can be reduced, and a volume-energy density of the lithium-ion battery is increased by 1.3%. In addition, because there is no primer layer, a third adhesive force is reduced, and the pass rate of the impact test is increased from 4/10 to 9/10.

Compared with Comparative Example 1, in Examples 7 and 8, because the primer layer is eliminated, the electrode assembly becomes thinner, and this is advantageous to the volume-energy density to some extent; however, to increase the adhesive force by increasing the weight percentage of the binder, a specific loss is caused to activity of the active material, and comprehensive volumetric energy densities are increased by 0.8% and 0.6% respectively. In addition, because there is no primer layer, a third adhesive force is reduced, and the pass rate of the impact test is increased from 4/10 to 8/10.

The foregoing descriptions are only embodiments of this application and an explanation of applied technical principles. Persons skilled in the art should understand that the scope of the disclosure related to this application is not limited to technical solutions formed by specifically combining the foregoing technical characteristics, and shall also cover other technical solutions formed by randomly combining the foregoing technical characteristics or their equivalent characteristics. For example, a technical solution formed by replacing the foregoing technical characteristics with technical characteristics with similar functions disclosed in this application are covered in the scope of the disclosure related to this application.

**Claims**

1. An electrode plate, **characterized in that**, the electrode plate comprising:

   a current collector (1), comprising, in a width direction, a first edge region (4), a second edge region (5), and an intermediate region (6) located between the first edge region (4) and the second edge region (5); and
   an active material layer (2) provided on the current collector (1), wherein the active material layer (2) comprises a first portion (7), a second portion (8), and an intermediate portion (9) respectively provided on the first edge region (4), the second edge region (5), and the intermediate region (6), wherein
   a first adhesive force between the first portion (7) and the current collector (1), and a second adhesive force between the second portion (8) and the current collector (1), are both greater than a third adhesive force between the intermediate portion (9) and the current collector (1).

2. The electrode plate according to claim 1, **characterized in that** the first portion (7) has a width d1, the second portion (8) has a width d2, and the active material layer (2) has a width D, wherein $1\% \leq d1/D \leq 10\%$, and $1\% \leq d2/D$

≤ 10%.

3. The electrode plate according to claims 1 or 2, **characterized in that** the first portion (7) comprises a first binder, the second portion (8) comprises a second binder, the intermediate portion (9) comprises a third binder, and a weight percentage of the first binder and a weight percentage of the second binder each are greater than a weight percentage of the third binder.

4. The electrode plate according to claim 3, **characterized in that** adhesive forces of the first binder and the second binder on the current collector (1) each are greater than an adhesive force of the third binder on the current collector (1).

5. The electrode plate according to claims 3 or 4, **characterized in that** the weight percentage of the third binder is 1% to 5%.

6. The electrode plate according to any one of claims 3 to 5, **characterized in that** the weight percentages of the first binder and the second binder each are 2 to 5 times the weight percentage of the third binder.

7. The electrode plate according to any one of claims 1 to 6, **characterized in that** the first adhesive force and the second adhesive force are both 2 to 5 times the third adhesive force.

8. The electrode plate according to any one of claims 1 to 7, **characterized in that** the first adhesive force and the second adhesive force are both greater than 10 N/m.

9. The electrode plate according to any one of claims 1 to 8, **characterized in that**,
when the electrode plate is a positive electrode plate, the active material layer (2) is a positive active material layer, and the first binder, the second binder, and the third binder each independently comprise at least one of polyvinylidene fluoride, polyvinylidene fluoride-fluorinated olefin copolymer, polytetrafluoroethylene, sodium carboxymethyl cellulose, styrene-butadiene rubber, polyurethane, fluorinated rubber, or polyvinyl alcohol; and
when the electrode plate is a negative electrode plate, the active material layer (2) is a negative active material layer, and the first binder, the second binder, and the third binder each independently comprise at least one of polyvinylidene fluoride, polyvinylidene fluoride-fluorinated olefin copolymer, polyvinylpyrrolidone, polyacrylonitrile, poly(methyl acrylate), polytetrafluoroethylene, sodium carboxymethyl cellulose, styrene-butadiene rubber, polyurethane, fluorinated rubber, or polyvinyl alcohol.

10. The electrode plate according to any one of claims 1 to 9, **characterized in that** at least a partial region in the current collector (1) is etched.

11. The electrode plate according to claim 10, **characterized in that** the first edge region (4) and the second edge region (5) are etched.

12. The electrode plate according to claim 11, **characterized in that** a coarseness of the first edge region (4) and the second edge region (5) each are 2 to 4 times a coarseness of the intermediate region (6).

13. The electrode plate according to claim 10, **characterized in that** a coarseness of the etched region of the current collector (1) is 2 to 4 times that of the non-etched region, and a coarseness of the non-etched region is less than 2 μm.

14. An electrochemical apparatus, **characterized by** comprising:

a positive electrode plate (12);
a negative electrode plate (13); and
a separator (11), provided between the positive electrode plate (12) and the negative electrode plate (13), wherein the positive electrode plate (12) and/or the negative electrode plate (13) is the electrode plate according to any one of claims 1 to 13.

15. An electronic apparatus, **characterized by** comprising the electrochemical apparatus according to claim 14.

**Amended claims in accordance with Rule 137(2) EPC.**

1. An electrode plate, the electrode plate comprising:

   a current collector (1), comprising, in a width direction, a first edge region (4), a second edge region (5), and an intermediate region (6) located between the first edge region (4) and the second edge region (5); and an active material layer (2) provided on the current collector (1), wherein the active material layer (2) comprises a first portion (7), a second portion (8), and an intermediate portion (9) respectively provided on the first edge region (4), the second edge region (5), and the intermediate region (6), wherein a first adhesive force between the first portion (7) and the current collector (1), and a second adhesive force between the second portion (8) and the current collector (1), are both greater than a third adhesive force between the intermediate portion (9) and the current collector (1), **characterized in that** the first portion (7) comprises a first binder, the second portion (8) comprises a second binder, the intermediate portion (9) comprises a third binder, and a weight percentage of the first binder relative to the total weight of the first portion (7) and a weight percentage of the second binder relative to the total weight of the second portion (8) each are greater than a weight percentage of the third binder relative to the total weight of the intermediate portion (9), wherein the weight percentage of the third binder, relative to the total weight of the intermediate portion (9) is 1% to 5% and wherein the weight percentages of the first binder and the second binder each are 2 to 5 times the weight percentage of the third binder.

2. The electrode plate according to claim 1, **characterized in that** the first portion (7) has a width d1, the second portion (8) has a width d2, and the active material layer (2) has a width D, wherein $1\% \leq d1/D \leq 10\%$, and $1\% \leq d2/D \leq 10\%$.

3. The electrode plate according to claim 1 or 2, **characterized in that** adhesive forces of the first binder and the second binder on the current collector (1) each are greater than an adhesive force of the third binder on the current collector (1).

4. The electrode plate according to any one of claims 1 to 3, **characterized in that** the first adhesive force and the second adhesive force are both 2 to 5 times the third adhesive force.

5. The electrode plate according to any one of claims 1 to 4, **characterized in that** the first adhesive force and the second adhesive force are both greater than 10 N/m.

6. The electrode plate according to any one of claims 1 to 5, **characterized in that**,
   when the electrode plate is a positive electrode plate, the active material layer (2) is a positive active material layer, and the first binder, the second binder, and the third binder each independently comprise at least one of polyvinylidene fluoride, polyvinylidene fluoride-fluorinated olefin copolymer, polytetrafluoroethylene, sodium carboxymethyl cellulose, styrene-butadiene rubber, polyurethane, fluorinated rubber, or polyvinyl alcohol; and
   when the electrode plate is a negative electrode plate, the active material layer (2) is a negative active material layer, and the first binder, the second binder, and the third binder each independently comprise at least one of polyvinylidene fluoride, polyvinylidene fluoride-fluorinated olefin copolymer, polyvinylpyrrolidone, polyacrylonitrile, poly(methyl acrylate), polytetrafluoroethylene, sodium carboxymethyl cellulose, styrene-butadiene rubber, polyurethane, fluorinated rubber, or polyvinyl alcohol.

7. The electrode plate according to any one of claims 1 to 6, **characterized in that** at least a partial region in the current collector (1) is etched.

8. The electrode plate according to claim 7, **characterized in that** the first edge region (4) and the second edge region (5) are etched.

9. An electrochemical apparatus, **characterized by** comprising:

   a positive electrode plate (12);
   a negative electrode plate (13); and
   a separator (11), provided between the positive electrode plate (12) and the negative electrode plate (13), wherein

the positive electrode plate (12) and/or the negative electrode plate (13) is the electrode plate according to any one of claims 1 to 8.

10. An electronic apparatus, **characterized by** comprising the electrochemical apparatus according to claim 9.

D

d1   d2

H   7   9   8   2

4   6   5   1

2

FIG. 1

9

7

8

FIG. 2

12

11

13

FIG. 3

Europäisches
Patentamt

European
Patent Office

Office européen
des brevets

# EUROPEAN SEARCH REPORT

Application Number

EP 21 15 3430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/159114 A1 (TANIHARA KOICHI [JP] ET AL) 7 June 2018 (2018-06-07) | 1-11,14, 15 | INV. H01M4/04 H01M4/139 |
| A | * paragraph [0031] - paragraph [0060]; figures 3,4,5 *<br>----- | 12,13 | H01M4/62 H01M4/66 H01M10/0525 |

TECHNICAL FIELDS SEARCHED     (IPC)

H01M

The present search report has been drawn up for all claims

| Place of search | Date of completion of the search | Examiner |
|---|---|---|
| Munich | 21 June 2021 | Radeck, Stephanie |

## ANNEX TO THE EUROPEAN SEARCH REPORT
## ON EUROPEAN PATENT APPLICATION NO.

EP 21 15 3430

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2021

| Patent document cited in search report | Publication date | Patent family member(s) | Publication date |
|---|---|---|---|
| US 2018159114 A1 | 07-06-2018 | CN 107004837 A | 01-08-2017 |
| | | EP 3240066 A1 | 01-11-2017 |
| | | JP 2016122631 A | 07-07-2016 |
| | | KR 20170095956 A | 23-08-2017 |
| | | US 2018159114 A1 | 07-06-2018 |
| | | WO 2016103939 A1 | 30-06-2016 |

EPO FORM P0459

For more details about this annex : see Official Journal of the European Patent Office, No. 12/82